# EUROPÄISCHE PATENTSCHRIFT

(11) **EP 4 416 393 B1**
(45) Veröffentlichungstag und Bekanntmachung des Hinweises auf die Patenterteilung: **06.08.2025**
(21) Anmeldenummer: 22801155.7
(22) Anmeldetag: 13.10.2022
(51) Int. Cl.: F15B 15/28, F15B 21/0427, B60T 13/00, F16D 59/02

(54) **ELEKTROHYDRAULISCHE BETÄTIGUNGSVORRICHTUNG MIT INTEGRIERTEN ELEKTRISCHEN FUNKTIONSELEMENTEN**
ELECTROHYDRAULIC ACTUATING DEVICE HAVING INTEGRATED ELECTRICAL FUNCTIONAL ELEMENTS
DISPOSITIF D'ACTIONNEMENT ÉLECTROHYDRAULIQUE À ÉLÉMENTS FONCTIONNELS ÉLECTRIQUES INTÉGRÉS

(30) Priorität: 14.10.2021 DE 202021105582 U
(43) Veröffentlichungstag der Anmeldung: 21.08.2024
(73) Patentinhaber: EMG Automation GmbH, 57482 Wenden (DE)
(72) Erfinder: FUCHS, Roman, 57482 Wenden (DE); KABS, Alexander, 58135 Hagen (DE); GRELLA, Peter, 39387 Oschersleben (DE); MORGENSTERN, Alexander, 57258 Freudenberg (DE); WURSTER, Uwe, 57462 Olpe (DE); HOLTERHOFF, Mike, 57482 Wenden (DE)
(74) Vertreter: Rings, Rolf
(86) Internationale Anmeldenummer: PCT/EP2022/078583
(87) Internationale Veröffentlichungsnummer: WO 2023/062164

(56) Entgegenhaltungen:
- EP-A1- 3 387 267
- DE-A1- 102013 105 446
- US-A- 2 885 860
- US-A- 3 848 411

## Beschreibung

Die vorliegende Erfindung betrifft eine elektrohydraulische Betätigungsvorrichtung mit einem Elektromotor und einer von dem Elektromotor angetriebenen Pumpe einer Hydraulikeinheit, welche eine hydraulische Kolben-/Zylinder-Einheit für ein Betätigen von verschiedenartigen Bauteilen, Elementen oder Bremssystemen umfasst. Derartige elektrohydraulische Betätigungsvorrichtungen weisen in einem Gehäuse zum einen einen Elektromotor zum Antreiben der Pumpe für das Hydrauliköl auf und zum anderen eine Hydraulikeinheit, welche in dem gleichen und nach außen hin abgeschlossenen Gehäuse der Vorrichtung vorgesehen ist. Von dem Gehäuse ragt eine Kolbenstange nach außen hin vor, welche als Betätigungselement für den elektrohydraulischen Antrieb von verschiedenen Bauteilen verwendet wird.

Derartige elektrohydraulische Betätigungsvorrichtungen oder Aktuatoren werden in verschiedenartigen Anwendungen im Maschinenbau und im Anlagenbau eingesetzt. Ein Anwendungsgebiet sind sogenannte Bremslüftgeräte, bei welchen die elektrohydraulischen Aktuatoren für ein Öffnen von Bremsen beispielsweise von Krananlagen verwendet werden. Die Bremslüftgeräte dienen dabei für ein im Normalbetrieb geöffnetes Bremssystem, das durch den Hydraulikdruck der Hydraulikeinheit entgegen der Kraft einer Feder gewährleistet wird. Andere Anwendungsgebiete derartiger elektrohydraulischer Aktuatoren oder Bremslüftgeräte sind beispielsweise die Verstellung von Klappen oder Bauteilen über einen vorbestimmten Hub, welcher mit der aus den Vorrichtungen herausragenden Kolbenstange ermöglicht wird.

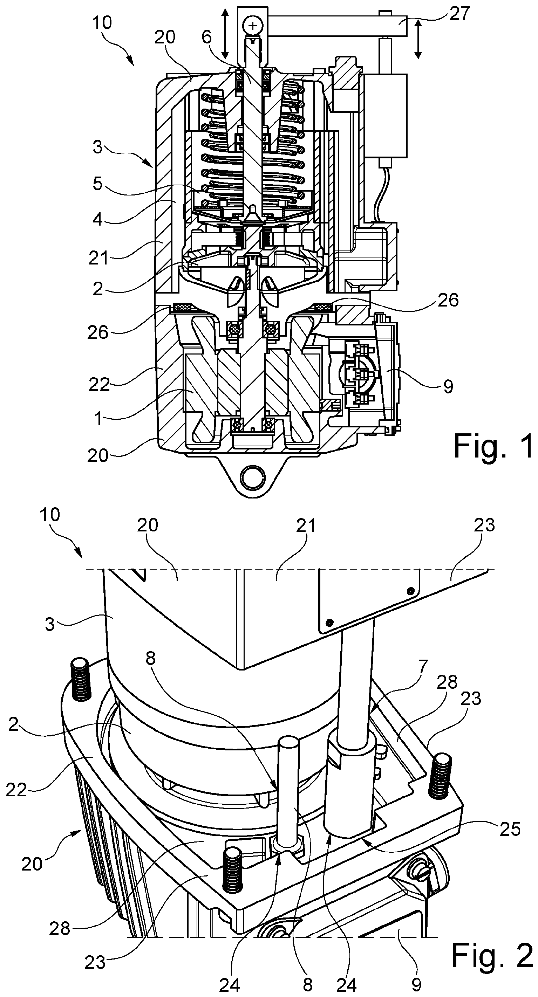

Eine im Stand der Technik bekannte elektrohydraulische Betätigungsvorrichtung 10 ist in Fig. 1 der beigefügten Zeichnungen in einer seitlichen Schnittansicht gezeigt. Die elektrohydraulische Betätigungsvorrichtung 10 umfasst ein nach außen hin verschlossenes Gehäuse 20, welches in einem oberen Gehäuseteil 21 eine Hydraulikeinheit 3 enthält. Die Hydraulikeinheit 3 besteht aus einem Kolben 5, der in einem Zylinder 4 durch Erzeugung eines Drucks im Hydrauliköl durch eine Pumpe 2 hin und her bewegbar ist gegen eine an der Oberseite vorgesehene Kraft einer oder mehrerer Spiralfeder(n). Die Hydraulikeinheit 3 bzw. die Pumpe 2 wird durch eine in einem unteren Gehäuseteil 22 angeordnete Motoreneinheit mit einem Elektromotor 1 angetrieben. Bei diesem Ausführungsbeispiel ist der Elektromotor 1 ein trockenlaufender Elektromotor 1, der von dem Hydrauliköl der Hydraulikeinheit 3 abgedichtet und abgetrennt ist. Durch den Druck des Hydrauliköls wird die als Betätigungselement dienende Kolbenstange 6 entsprechend dem Pfeil in der Fig. 1 ausgefahren und bei Anhalten wieder eingezogen aufgrund der Kraft der Spiralfeder.

Bei derartigen elektrohydraulischen Betätigungsvorrichtungen 10 ist es bekannt, die Lage des Kolbens 5 bzw. der Kolbenstange 6 als Betätigungseinrichtung über Sensoren zu erfassen. Beispielsweise werden außen an dem Gehäuse 20 der Vorrichtung 10 mechanisch gekoppelte Lagesensoren 27 angebracht, damit die jeweilige Stellung (geöffnet, geschlossen oder auch Zwischenstellung) erfasst werden kann. Solche außen am Gehäuse angebrachten mechanischen Lagesensoren 7 oder Schalter haben den Nachteil, dass es relativ aufwendig ist, diese an der Außenseite der Gehäuse 2 anzubringen und mit den hauptsächlich im Inneren geführten Hydraulikkomponenten der Hydraulikeinheit 3 zu koppeln. Zum anderen sind solche außenliegenden Lagesensoren 27 für die Erfassung und Anzeige der Lage der Betätigungsvorrichtung 10 anfällig gegenüber Beschädigungen. Auch lassen sie sich leicht manipulieren, so dass dann eine ungenaue Anzeige der tatsächlichen Stellung der Betätigungsvorrichtung 10 und deren Verstellelement, nämlich der Kolbenstange 6, gegeben ist. Bei solchen bekannten elektrohydraulischen Betätigungsvorrichtungen 10 wird für bestimmte Anwendungen eine Heizeinrichtung vorgesehen, welche in dem Beispiel der Fig. 1 eine elektrische Heizung 26 ist, die an dem unteren Gehäuseteil 22 oberhalb von dem Elektromotor 1 angebracht ist. Mit solch einer Heizung 26 wird bei Bedarf die Vorrichtung auf eine geforderte Betriebstemperatur gebracht. Bei dem Einbau der Heizung 26 in dem unteren Gehäuseteil 22 besteht jedoch der Nachteil, dass es relativ viel Zeit braucht, bis das Hydrauliköl im oberen Gehäuseteil 21 der Hydraulikeinheit 3 die erforderliche Betriebstemperatur tatsächlich erreicht. Daher bestehen im Stand der Technik im Hinblick auf solche elektrischen Funktionselemente erhebliche Nachteile, was den Einbau, die Steuerung und Überwachung des Betriebs derartiger elektrohydraulischer Betätigungsvorrichtungen 10 betrifft.

### Ergänzungsseite 2a (zur Einfügung nach dem letzten Absatz auf Seite 2)

DE 10 2013 105 446 A1 offenbart ein elektrohydraulisches Bremslüftgerät mit einem gegenüber dem unteren Gehäuseteil verbreiterten oberen Gehäuseteil für die Aufnahme der hydraulischen Bauteile und des Hydrauliktanks. Zwischen dem oberen, insgesamt verbreiterten Gehäuseteil des Hydraulikgehäuses und dem unteren Gehäuseteil für den Elektromotor befindet sich eine nach außen vorragende verbreiterte einstückige Funktionseinheit zur Aufnahme von Anschlüssen und Verbindungselementen.

Aus EP 3 387 267 A1 wiederum ist ein Gehäuse einer elektrohydraulischen Betätigungsvorrichtung bekannt, bei welcher ein Gehäuse nebeneinandergeordnet einen Gehäuseteil für die Aufnahme der Kolben/Zylinder-Einheit, einen trockenliegenden Zwischenraum für ein Wegeventil und Hydraulikleitungen sowie einen sich daran anschließenden, ebenfalls parallel angeordneten Gehäuseabschnitt für den Elektromotor und die Pumpeneinheit aufweist.

Aus dem US-Patent US 2,885,860 A ist ein Gehäuse für eine elektrohydraulische Betätigungsvorrichtung entnehmbar, bei welcher das Gehäuse in zweiteiliger Form mit einem unteren Gehäuseteil und einem oberen Gehäuseteil versehen ist. Zusätzlich wird seitlich ein angeschlossener Gehäusekasten an dem Hauptgehäuse angebracht, in welchem auch weitere Anschlusselemente und Funktionselemente untergebracht sind, die über einen Gehäusedeckel mit Verschraubungen von außen leicht zugänglich sind.

Gemäß dem US-Patent US 3,848,411 A ist eine elektrohydraulische Betätigungsvorrichtung mit mehreren Abschnitten eines einstückigen Gehäuses versehen, in welchem keinerlei seitlich vorragende Erweiterungen oder Ausbuchtungen vorhanden sind. In einer trockenliegenden, abgetrennten Gehäusekammer ist eine als Positionssensor für die Kolbenposition gedachte Sensoreinheit angeordnet, die über eine nach außen ragende Stange und Querverbindung über Verschraubungen mit der Kolbenstange der Kolben/Zylinder-Einheit verbunden ist.

Vor diesem Hintergrund ist es die Aufgabe der vorliegenden Erfindung, eine elektrohydraulische Betätigungsvorrichtung bereitzustellen, welche hinsichtlich der Erfassung und Anzeige der Lage des Betätigungselements genauer und gegenüber Störungen von außen weniger anfällig ist und eine effektivere Betriebsweise mit einem schnelleren Start der Vorrichtung als bisher ermöglicht.

Diese Aufgabe wird mit einer elektrohydraulischen Betätigungsvorrichtung mit den Merkmalen nach Anspruch 1 gelöst. Vorteilhafte Ausgestaltungen und Weiterbildungen der Erfindung sind Gegenstand der abhängigen Ansprüche.

Erfindungsgemäß wird nach Anspruch 1 eine elektrohydraulische Betätigungsvorrichtung mit einem Elektromotor und einer von diesem angetriebenen Pumpe zum Betrieb einer Hydraulikeinheit mit einem Stellzylinder, einem Kolben und einer als Betätigungselement dienenden und aus dem Gehäuse vorragenden Kolbenstange vorgeschlagen, wobei der Elektromotor und die Hydraulikeinheit jeweils in einem Gehäuseteil des Gehäuses aufgenommen sind, wobei der Gehäuseteil der Hydraulikeinheit vom Gehäuseteil zur Aufnahme des Elektromotors abgetrennt und dazu abgedichtet ist, wobei die Vorrichtung dadurch gekennzeichnet ist, dass das Gehäuse mindestens im Bereich der Hydraulikeinheit eine im Verhältnis zur Längsachse X der Vorrichtung seitliche Erweiterung als lokale Ausbuchtung des Gehäuses an mindestens einer Seite über den Umfang des Stellzylinders hinaus und mindestens über eine Höhe eines Stellwegs des Kolbens hinweg aufweist für eine integrierte Aufnahme von insbesondere elektrischen Funktionselementen, Sensoren oder Steuerkomponenten direkt im hydraulischen, mit Hydrauliköl gefüllten Teil des Gehäuses seitlich angrenzend zu der Hydraulikeinheit.

Das Gehäuse der Betätigungsvorrichtung ist damit nicht direkt angrenzend an allen Seiten zu der Hydraulikeinheit bündig vorgesehen, sondern weist eine gezielte lokale Erweiterung oder Ausbuchtung an mindestens einer Seite derart auf, dass ein spezieller Aufnahmeraum im Hydraulikteil der Vorrichtung für die Aufnahme von elektrischen Funktionselementen wie Sensoren, Heizelementen oder anderen elektrischen Funktionselementen bereitgestellt wird. Die Erweiterung ist seitlich zu einer Längsachse, also radial im Verhältnis zu der Verstellung der Betätigungsvorrichtung und über eine Höhe des Hubs oder Stellwegs des Kolbens vorgesehen. Die Erweiterung des Gehäuses ist in solch einer Form gebildet, dass eine Art integrierte Aufnahme für darin angebrachte elektrische Komponenten, wie z. B. Lagesensoren, Heizelemente, Messsysteme, Füllstandsanzeigen, Temperaturfühlern etc., bereitgestellt wird. Mit solch einer integrierten Form der direkten Einbindung von elektrischen Funktionselementen in einem Seitenbereich des Gehäuses im Bereich der Hydraulikeinheit wird eine kompakte und gegenüber Störungen und Beschädigungen abgesicherte Form der Betätigungsvorrichtungen bereitgestellt. Die elektrischen Bauteile oder Sensoren sind unanfällig gegenüber etwaigen Beschädigungen oder Beeinträchtigungen von außen, was beispielsweise im Schwermaschinenbereich von erheblichem Vorteil ist. Auch sind die in der Erweiterung und der damit gebildeten seitlichen Aufnahme eingebrachten elektrischen Funktionselemente oder Sensoren vor einer Manipulation gesichert, so dass eine langfristig sehr genaue Lageanzeige beispielsweise des Kolbens der Hydraulikeinheit ermöglicht wird. Durch das Einbringen auch beispielsweise von elektrischen Heizstäben oder ähnlichem als elektrische Funktionselemente in der Erweiterung des Gehäuseteils der Hydraulikeinheit wird außerdem eine schnelle Betriebsbereitschaft der Vorrichtung gewährleistet. Das Hydrauliköl wird direkt aufgeheizt, und es muss nicht umständlich von außen her durch Gehäuse- oder Trennwände eine Beheizung erfolgen. Eine außerhalb vom hydraulischen Bereich liegende Heizung, wie sie im Stand der Technik bekannt war, benötigt eine deutlich höhere Zeit, bis die erforderliche Betriebstemperatur erreicht ist, da das Hydrauliköl nicht selbst direkt erhitzt werden kann.

Die seitliche Erweiterung des Gehäuses für die Aufnahme der elektrischen Funktionselemente kann beispielsweise eine rechteckige oder kantige Form vorragend von dem ansonsten im Wesentlichen kreiszylindrischen Aufbau der Betätigungsvorrichtung aufgrund der Kolben-/Zylinder-Einheit der Hydraulikeinheit aufweisen. Die Erweiterung ragt einseitig von dem Gehäuse seitlich etwas vor, so dass genügend Raum ist für die direkte Integrierung der elektrischen Zusatzelemente oder Funktionselemente, wie z. B. Lagesensoren oder elektrische Heizstäbe.

Erfindungsgemäß ist ferner vorgesehen, dass in der seitlichen Erweiterung für die elektrischen Funktionselemente Anschlüsse oder Aufnahmen vorgesehen sind. Die Erweiterung, welche den Platz für die integrierte Anordnung von solchen elektrischen Funktionselementen, wie z. B. Heizungen, Lagensensoren oder dergleichen, bietet, ist damit gleichzeitig mit entsprechenden Anschlüssen und/oder Aufnahmen realisiert. Die Funktionselemente können direkt in der Erweiterung eingesetzt und leicht montiert werden, beispielsweise in dafür vorgesehene Schraublöcher an einem Boden der Erweiterung oder einem Zwischenboden des Gehäuses der Vorrichtung. Die Lagesensoren oder Heizeinrichtungen sind dadurch erfindungsgemäß sicher im Inneren des mit Hydrauliköl gefüllten Gehäuseteils des Gehäuses fixiert. Die Anschlüsse oder Aufnahmen für die Funktionselemente haben den Vorteil, dass auch eine Vorabmontage der entsprechend je nach Anforderungen und Anwendungen der Betätigungsvorrichtung erforderlichen Funktionselemente erfolgen kann. Es kann beispielsweise eine Bauart vorgesehen werden, bei der lediglich eine Heizeinrichtung in der Erweiterung integriert eingebaut ist. Alternativ kann eine Bauart vorgesehen sein, die zwar keine Heizung als Funktionselement umfasst, jedoch einen Lagesensor zur besseren Erfassung der Position des Kolbens und der Kolbenstange der Hydraulikeinheit. Auch eine Kombination von beidem, nämlich einerseits einer elektrischen Heizung und zusätzlich einer integrierten Lageerfassungseinrichtung, ist mit solch einer erfindungsgemäßen Form der lokalen, radialen Erweiterung in dem Gehäuseteil mit Anschlüssen und Aufnahmen ermöglicht.

Gemäß einer vorteilhaften Ausgestaltung der Erfindung bildet die seitliche Erweiterung des Gehäuses einen im Querschnitt in etwa rechteckigen seitlichen Aufnahmebereich für Funktionselemente. Die elektrischen Funktionselemente oder mindestens ein elektrisches Funktionselement kann so in einen dafür speziell im Gehäuse mit ausgebildeten Raum eingesetzt und dort montiert werden. Die Funktionselemente sind dadurch von außen nach einer Fertigstellung der Betätigungsvorrichtung nicht mehr frei zugänglich und so vor Beschädigungen, einer Manipulation etc. gut geschützt. Mit solch einer in etwa rechteckigen seitlichen Erweiterung wird eine Art kastenartiger seitlicher Raum direkt angrenzend neben der Kolben-/Zylinder-Einheit der Hydraulikeinheit bereitgestellt, der sich in der Höhe über mindestens den Stellweg des Kolbens erstreckt und welcher den mit Hydrauliköl gefüllten Innenraum des Gehäuses der Vorrichtung quasi für diese Art von elektrischen Zusatzfunktionen erweitert. Alternativ zur rechteckigen Form kann die Erweiterung auch eine Art trapezförmige Form oder quaderartige Form aufweisen und können die vorstehenden Kanten und Ecken der Erweiterung leicht rund oder abgerundet gebildet sein.

Gemäß einer vorteilhaften Ausgestaltung der Erfindung ist die seitliche Erweiterung des Gehäuses mit Anschlussöffnungen für elektrische Anschlüsse zu einer Außenseite des Gehäuses oder direkt zu einem Klemmkasten versehen. Die Anschlussöffnungen können als einfache Bohrungen oder Durchgangsöffnungen in einem Gehäuseteil des Gehäuses der Vorrichtung innerhalb der Erweiterung vorgesehen werden. Mit solchen Anschlussöffnungen lassen sich die in den flüssigen Bereich des Hydrauliköls hineinragenden Funktionselemente direkt einfach im Gehäuse montieren, fixieren und abdichten. Die erforderlichen elektrischen Anschlüsse und elektrischen Leitungen liegen dadurch in einem von dem Hydrauliköl abgetrennten Trockenbereich im Inneren des Gehäuses. Eine direkte Anbindung oder Ausgestaltung der Öffnungen beispielsweise zu einem Klemmkasten für elektrische Anschlüsse der Vorrichtung hin erlaubt es, hier die Verdrahtung direkt innerhalb des ohnehin vorhandenen Klemmkastens für die für den Betrieb der elektrohydraulischen Betätigungsvorrichtung erforderlichen Anschlüsse, Klemmleisten oder Steuerungen vorzunehmen. Oder die Anschlussöffnungen sind an einem Trennboden oder einer Gehäusewand z. B. als Gewindelöcher vorgesehen.

Gemäß einer weiteren vorteilhaften Ausgestaltung der Erfindung umfassen die elektrischen Funktionselemente mindestens einen berührungslosen, magnet-induktiven Sensor, welcher zur Lageerfassung des Kolbens mittels mindestens eines daran angebrachten Magnets angeordnet und eingerichtet ist. Somit wird ein im Inneren des Hydrauliköls der Hydraulikeinheit liegender magnet-induktiver Sensor bereitgestellt, der als ein Reed-Schalter beispielsweise realisiert werden kann. An beispielsweise einem Außenumfang des Kolbens ist mindestens ein Permanentmagnet oder eine Mehrzahl von Permanentmagneten montiert, so dass über ein parallel dazu und über die Höhe des Stellwegs des Kolbens hinweg sich erstreckendes Sensorelement in Form eines solchen Reed-Schalters eine genaue Lageerfassung erfolgen kann. Gemäß einem vorteilhaften Aspekt der Erfindung sind Magnete für die Lageerfassung mit dem in der seitlichen Erweiterung angeordneten Sensor oder Sensoren an einer Stirnfläche des Kolbens vorgesehen. Damit lässt sich berührungslos und sehr genau aufgrund der räumlichen Nähe die jeweilige Lage des Kolbens im Inneren der Betätigungsvorrichtung erfassen. Damit lässt sich beispielsweise feststellen, ob sich die Vorrichtung in einer Stellung "geöffnet" oder "geschlossen" befindet. Die jeweiligen Schaltpunkte an dem in der Erweiterung angeordneten, beispielsweise röhrenförmigen elektromagnetischen Sensor können dabei vorab so eingestellt werden, dass auch ein Resthub bis zu einem Anschlag an einem Ende innerhalb des Zylinders der Hydraulikeinheit eingestellt werden kann. Auch können je nach Bedarf und Anwendungsfall unterschiedliche Endstellungen durch die Anordnung und Positionierung der an der Seite in der Erweiterung liegenden Schaltelemente des magnet-induktiven Sensors voreingestellt und auch variabel später wieder verändert werden. Somit weist die Vorrichtung eine exakte Lagebestimmung des Kolbens auf, die vor Beschädigung, Manipulation oder anderen Einflüssen von außen her geschützt im Inneren des Gehäuses in dem Hydrauliköl selbst und nahe bei dem Kolben vorgesehen ist.

Gemäß einer weiteren vorteilhaften Ausgestaltung der Erfindung umfasst die Betätigungsvorrichtung als elektrisches Funktionselement mindestens eine elektrische Heizeinrichtung, welche in das Hydrauliköl der Hydraulikeinheit hineinragt. Die Heizeinrichtung, welche beispielsweise ein einfacher, elektrisch betriebener Heizstab, eine Heizwendel oder eine Flächenheizung sein kann, ist in der seitlichen Erweiterung direkt im Hydrauliköl selbst montiert. Dadurch lässt sich schneller eine Betriebstemperatur der Betätigungsvorrichtung nach einem Start erreichen. Das Aufheizen des Hydrauliköls erfolgt direkt innerhalb des Hydrauliköls selbst in der Hydraulikeinheit und nicht mehr von außen, wie es bisher im Stand der Technik der Fall war.

Gemäß einer weiteren vorteilhaften Ausgestaltung der Erfindung ist die seitliche Erweiterung des Gehäuses oberhalb und in Fortsetzung zu einem Klemmkasten für elektrische Anschlüsse der Betätigungsvorrichtung vorgesehen. Die seitliche Erweiterung, welche beispielsweise in Form eines kantig seitlich angeordneten Bereichs mindestens eines oberen Gehäuseteils ausgebildet sein kann, ist damit angrenzend zu dem Klemmkasten und in Fortsetzung zu dem Klemmkasten mit in etwa den gleichen Außenabmessungen vorgesehen. Dadurch lässt sich der Anschluss der elektrischen Funktionselemente im Inneren der Erweiterung leicht realisieren. Mittels Durchgangsöffnungen oder Bohrungen in einem Gehäuseteil oder einer Wand des Klemmkastens oder eines Trennbodens können direkt die Anschlüsse und Verdrahtungen der elektrischen Funktionselemente in dem zentralen Klemmkasten der Vorrichtung selbst vorgesehen werden. Alternativ können die elektrischen Funktionselemente auch auf andere Art angeschlossen werden, beispielsweise durch nach außen geführte Anschlusskabel und Sensorleitungen. Die Einsatzmöglichkeiten und die Variabilität in der Ausgestaltung im Zusammenhang mit den Zusatzoptionen von elektrischen Funktionselementen derartiger Betätigungsvorrichtungen sind dadurch stark erhöht. Der Klemmkasten selbst der Vorrichtung, welcher für die elektrischen Anschlüsse des Elektromotors und dergleichen vorgesehen ist, kann dabei beispielsweise als angeschlossener separater Kasten an einem unteren Gehäuseteil montiert sein. Der Klemmkasten kann auch durch eine kastenartige Ausformung des unteren Gehäuseteils der Betätigungsvorrichtung realisiert werden. Der Klemmkasten ist mit entsprechenden Anschlüssen und Öffnungen für Elektrokabel oder Sensorkabel und in der Regel mit einem durch Schrauben verschlossenen Deckel versehen, der einen Zugang zu den elektrischen Anschlüssen auch nach einer Fertigstellung der Betätigungsvorrichtung auch im späteren Betrieb und für die Einstellung und Anpassung der Vorrichtung bietet. Die Erweiterung ist vorteilhafterweise direkt angrenzend, also in einer Art Fortsetzung zu dem Klemmkasten der Vorrichtung ausgebildet. Die Erweiterung hat damit nach außen hin eine ähnliche Abmessung und Erstreckung über das gesamte Gehäuse hinweg, so dass keine störenden, vorragenden Teile vorhanden sind, die beim Betrieb in beispielsweise dem Schwermaschinenbau leicht zu Beschädigungen der Komponenten führen können.

Gemäß einer weiteren vorteilhaften Ausgestaltung der Erfindung ist das Gehäuse an der Innenseite einer Wand der Erweiterung mit einer Aussparung zum Bilden eines vergrößerten Aufnahmebereichs für die elektrischen Funktionselemente versehen. Die Wand im Bereich der Erweiterung ist quasi mit einer beispielsweise rechteckförmigen Aussparung gebildet, so dass auch bei relativ kompakter Bauform der Vorrichtung hier ausreichend Platz für die Aufnahme eines elektrischen Funktionselements oder alternativ mehrerer Funktionselemente, wie z. B. eines Heizstabs und eines Lageerfassungssensors, bereitgestellt wird.

Gemäß einer weiteren vorteilhaften Ausgestaltung der Erfindung weisen die elektrischen Funktionselemente oder das mindestens eine elektrische Funktionselement in dem hydraulischen Teil des Gehäuses innerhalb der seitlichen Erweiterung eine gekapselte Bauform auf. Der magnet-induktive Sensor ist beispielsweise gekapselt innerhalb eines Aluminiumrohres vorgesehen, das sich parallel zu der Längsachse X der Betätigungsvorrichtung und damit parallel zu der Kolbenstange erstreckt. Die Schaltkontakte innerhalb der gekapselten Rohrform des Sensors sind damit geschützt vor dem Hydrauliköl und erlauben dennoch eine genaue Positionserfassung und Lagefeststellung des Stellkolbens aufgrund der räumlichen Nähe. Die Heizung kann beispielsweise als ein gekapselter Heizstab in Form eines elektrischen Heizwiderstands im Inneren einer Röhre oder in Form eines Flächenelements vorgesehen werden. Die gekapselte Form des Heizelements kann aus verschiedenen Materialien, wie z. B. Edelstahl, Kupfer oder aber auch Aluminium, realisiert sein. Damit sind die elektrischen Funktionselemente in der seitlichen Erweiterung des Gehäuses innerhalb der Hydraulikeinheit vor dem Hydrauliköl geschützt und können dennoch direkt angrenzend und nahe an den Hydraulikteilen und vor allem innerhalb des Hydrauliköls selbst montiert sein.

Gemäß einer weiteren vorteilhaften Ausgestaltung der Erfindung sind Anschlüsse oder Aufnahmen der Funktionselemente oder des mindestens eines Funktionselements in einem Trennboden zwischen dem Gehäuseteil der Hydraulikeinheit und dem Gehäuseteil des Elektromotors vorgesehen. Ein solcher Trennboden kann beispielsweise als ein Zwischenelement zwischen einem oberen Gehäuseteil und einem unteren Gehäuseteil zum Abtrennen und Abdichten der mit Hydrauliköl gefüllten Hydraulikeinheit von einem Trockenbereich in dem anderen Gehäuseteil vorgesehen werden. Auf diese Weise kann zum Beispiel auch ein trockenlaufender Elektromotor zum Antrieb der Pumpe der Hydraulikeinheit verwendet werden. Ein solch abgedichteter Trennboden weist erfindungsgemäß die Aufnahmen und Anschlüsse für die elektrischen Funktionselemente direkt auf. Die Abdichtung und die Montage sind dadurch für die Funktionselemente weiter erleichtert. Eine recht kompakte Bauform ist hierdurch möglich. Die elektrischen Anschlüsse können in dem von den Aufnahmen zu dem Hydraulikteil gegenüberliegenden Bereich direkt vorgesehen werden. Beispielsweise können die Aufnahmen oder Anschlüsse für die Funktionselemente als mit Innengewinde versehene Schraublöcher realisiert sein, die in den Trennboden einfach eingearbeitet sind, und die Elemente weisen entsprechende Außengewinde auf. Damit ist kein separates Anschlusselement oder Halterung für die elektrischen Funktionselemente erforderlich, da diese direkt in den ohnehin vorhandenen Trennboden im Inneren des Gehäuses mit integriert werden können. Die Vorinstallation, Einrichtung, Wartung und Montage der Elemente ist dadurch weiter deutlich vereinfacht.

Weitere Vorteile, Merkmale und Aspekte der vorliegenden Erfindung werden im Folgenden mehr im Detail anhand von Ausführungsbeispielen der Erfindung und im Zusammenhang mit den beigefügten Zeichnungen beschrieben werden. In den Zeichnungen zeigen:
- Fig. 1: eine vertikale Schnittansicht einer elektrohydraulischen Betätigungsvorrichtung gemäß dem Stand der Technik mit einem mechanischen Lagesensor an der Außenseite des Gehäuses;
- Fig. 2: eine teilweise perspektivische Ansicht mit voneinander getrennten Gehäuseteilen eines Ausführungsbeispiels einer erfindungsgemäßen elektrohydraulischen Betätigungsvorrichtung mit integriertem Lagesensor und Heizelement;
- Fig. 3a: eine perspektivische Ansicht eines Ausführungsbeispiels einer erfindungsgemäßen Betätigungsvorrichtung mit geöffneten Gehäuseteilen und einem Lagesensor sowie einer Heizeinrichtung;
- Fig. 3b: eine vertikale Schnittansicht einer elektrohydraulischen Betätigungsvorrichtung des Ausführungsbeispiels der Fig. 3a;
- Fig. 4a: eine perspektivische Ansicht eines weiteren Ausführungsbeispiels einer erfindungsgemäßen elektrohydraulischen Betätigungsvorrichtung mit geöffneten Gehäuseteilen und einer Heizeinrichtung;
- Fig. 4b: eine vertikale Schnittansicht der elektrohydraulischen Betätigungsvorrichtung gemäß dem Ausführungsbeispiel der Fig. 4a mit einem Schnitt in Bereich der Heizeinrichtung; und
- Fig. 5: eine teilweise perspektivische Querschnittsansicht einer weiteren erfindungsgemäßen Ausführungsform einer elektrohydraulischen Betätigungsvorrichtung.

Die Fig. 1 zeigt eine aus dem Stand der Technik bekannte elektrohydraulische Betätigungsvorrichtung 10 mit einem Gehäuse 20, in dessen Innerem zum einen die Hydraulikeinheit 3 mit der Hydraulikpumpe 2 und zum anderen ein in einem unteren Gehäuseteil 22 vorgesehener Elektromotor 1 vorgesehen ist, der zum Antrieb der Hydraulikpumpe 2 dient. Die Betätigungsvorrichtung 10 wird durch den Elektromotor angetrieben, indem das Hydrauliköl in dem oberen Gehäuseteil 21 mit der Pumpe 2 unter Druck gesetzt wird, so dass ein Kolben 5 innerhalb eines Zylinders 4 sich entgegen der Kraft einer mechanischen Feder im Inneren des Gehäuses 20 bewegt. Als Betätigungselement dient dabei die nach außen von dem Gehäuse 20 vorragende Kolbenstange 6. Zur Erfassung und Steuerung der Position und Lage der Betätigungsvorrichtung 10 werden sogenannte Lagesensoren verwendet, wie bei dem Beispiel der Fig. 1 in Form eines äußeren mechanischen Schalters 27 eingezeichnet. Der mechanische Schalter 27 ist mit dem nach außen vorstehenden Teil der Kolbenstange 6 gekoppelt, so dass jeweilige Endstellungen, wie zum Beispiel "offen" und "geschlossen" von der Betätigungsvorrichtung 10 durch den mechanischen Schalter 27 erfasst werden können. Im unteren Gehäuseteil, der von dem oberen, die Hydraulikeinheit 3 aufnehmenden Gehäuseteil 21 abgedichtet und abgetrennt ist, befindet sich eine Heizeinrichtung 26, welche dazu dient, bei Einschalten der Vorrichtung 10 diese auf eine erforderliche Betriebstemperatur zu bringen. Dabei hat sich als nachteilig erwiesen, dass relativ viel Zeit benötigt wird, bis eine Betriebstemperatur durch die Heizung 26 erreicht werden kann. Zum anderen hat die bekannte Form der Betätigungsvorrichtung 10 den Nachteil, dass die Lageerfassung von außen an dem Gehäuse 20 angebracht werden muss, so dass zum einen die Gefahr einer Beschädigung besteht und zum anderen die Genauigkeit der Messung der Lagesignale beeinträchtigt werden kann.

Ein Ausführungsbeispiel einer erfindungsgemäßen elektrohydraulischen Betätigungsvorrichtung 10 ist in der perspektivischen teilweisen Ansicht der Fig. 2 mit geöffnetem Gehäuse 20 gezeigt. Die Betätigungsvorrichtung 10 umfasst auch hier ein Gehäuse 20 bestehend aus mindestens einem oberen Gehäuseteil 21 zur Aufnahme der Hydraulikeinheit 3 und einem unteren Gehäuseteil 21. In der Fig. 2 ist der obere Gehäuseteil 21 von dem unteren Gehäuseteil 22 abgenommen und angehoben, so dass das Innere der Betätigungsvorrichtung 10 zur Veranschaulichung der Erfindung erkennbar ist. Der untere Gehäuseteil 22 dient der Aufnahme eines Elektromotors 1, welcher von dem mit Hydrauliköl gefüllten oberen Gehäuseteil 21 durch einen abgedichteten Trennboden 28 abgetrennt ist. Das Gehäuse 20 ist mit einer seitlichen Erweiterung 23 in der Form versehen, dass über den Außenumfang der Hydraulikeinheit 3 hinaus das Gehäuse 20 seitlich um einen in etwa rechteckigen Bereich oberhalb von dem Klemmkasten 9 verlängert und verbreitert ist. Dadurch entsteht ein Aufnahmeraum zwischen der Außenwand des Gehäuses 20 und dem Außenumfang der Hydraulikeinheit 3, welche aus der Kolben-/Zylinder-Einheit und der Hydraulikpumpe 2 besteht. Mit der so gebildeten seitlichen Erweiterung 23 können elektrische oder andere Funktionselemente 7, 8 in dem Innenraum des oberen Gehäuseteils 21 direkt in dem Hydrauliköl angeordnet und montiert werden. Beispielsweise kann als elektrisches Funktionselement eine Heizeinrichtung 8 oder ein Heizelement in Form eines Heizstabs oder dergleichen dort montiert und eingebaut werden. Zum anderen lässt sich auch ein Lagesensor 7 an der Stelle der seitlichen Erweiterung 23, die radial das Gehäuse 20 nach außen hin leicht verbreitert, einbauen. Bei dem in Fig. 2 dargestellten Ausführungsbeispiel sind sowohl eine Heizeinrichtung 8 als auch ein berührungsloser, magnet-induktiver Sensor 7 in Form eines Reed-Schalters eingebaut, so dass die Funktionselemente 7, 8 sowohl ein Aufheizen des Hydrauliköls direkt in dem Hydrauliköl selbst als auch eine genaue Lageerfassung des Kolbens 5 und damit der Kolbenstange 6 der Betätigungsvorrichtung 10 ermöglichen.

Auf diese Weise wird eine Art integrierte technische Zusatzfunktion oder mehrere Zusatzfunktionen in der elektrohydraulischen Betätigungsvorrichtung 10 gemäß der Erfindung bereitgestellt. Die Heizeinrichtung 8 und/oder der Lagesensor 7 können als elektrische Funktionselemente 7, 8 in dem Aufnahmebereich der seitlichen Erweiterung 23 des Gehäuses 20 untergebracht und montiert werden. Die Funktionselemente 7, 8 sind damit geschützt im Inneren des Gehäuses 20 vorgesehen und nicht anfällig gegenüber Manipulation oder Beschädigung oder Einflüsse von außen her. Durch das nahe Anordnen eines magnet-induktiven Sensors 7 an dem mit einem Permanentmagneten (in Fig. 2 nicht gezeigt) versehenen Kolben der Hydraulikeinheit 3 lassen sich auch eine sehr genaue Lagebestimmung und ein exaktes Lagesignal für die Steuerung und Überwachung der Betätigungsvorrichtung 10 erreichen. Bei diesem Ausführungsbeispiel der Fig. 2 ist in einer Innenwand des Gehäuses 20 eine Art rechteckige Aussparung 25 vorhanden, welche den Einbauraum für die elektrischen Funktionselemente 7, 8 vergrößert, ohne die Außenabmessungen der Vorrichtung 10 übermäßig zu vergrößern. Sowohl der Lagesensor 7 als auch die Heizeinrichtung 8, welche hier als beispielhafte elektrische Funktionselemente 7, 8 in der Erweiterung 23 eingebaut sind, sind in einer gekapselten Bauform vorgesehen, d. h. gegenüber dem Hydrauliköl in dem oberen Gehäuseteil 21 abgedichtet. Bei dem magnet-induktiven Sensor 7 wird beispielsweise ein Aluminiumrohr mit Schraubseitenflächen vorgesehen, während bei der Heizeinrichtung 8 eine gekapselte Rohrform aus beispielsweise Edelstahl, Kupfer oder auch Aluminium vorhanden sein kann. Mit dem so gebildeten Gehäuse 20 mit seitlicher Erweiterung 23 wird ein seitlicher Aufnahmeraum für die Funktionselemente 7, 8 im Inneren des Hydraulikbereichs bereitgestellt. Vorzugsweise sind in der Erweiterung Anschlussöffnungen 24, beispielsweise in Form von mit Gewinde versehenen Löchern, vorhanden, über welche die elektrischen Funktionselemente 7, 8 direkt eingebaut und befestigt werden können. Die elektrischen Anschlüsse liegen dann außerhalb von dem Hydraulikbereich, nämlich beispielsweise in einem darunterliegenden elektrischen Klemmkasten 9 oder in einem unterhalb eines Trennbodens 28 vorhandenen Trockenbereich, in welchem auch ein bei diesem Beispiel trockenlaufender Elektromotor 1 (in Fig. 2 nicht gezeigt) aufgenommen ist.

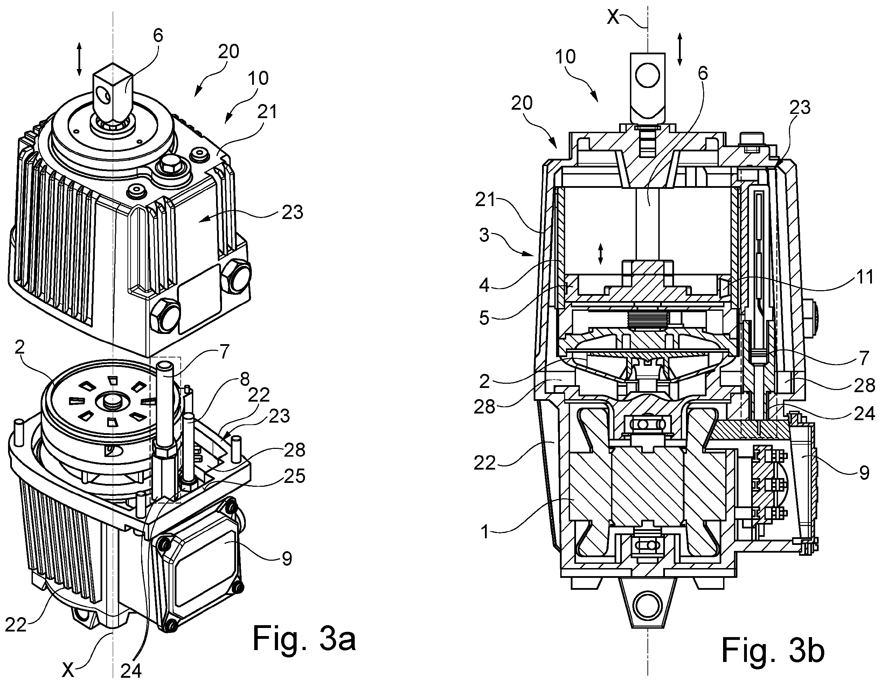

Die Fig. 3a und Fig. 3b zeigen jeweils in einer Perspektivansicht (auseinandergebaut) und einer vertikalen Schnittansicht ein weiteres Ausführungsbeispiel einer erfindungsgemäßen elektrohydraulischen Betätigungsvorrichtung 10. Auch hier ist das Gehäuse 20 auf einer Seite mit einer Erweiterung 23 versehen, die zur Aufnahme von elektrischen Funktionselementen 7, 8, wie z. B. einem magnet-induktiven Sensor 7 oder einem Heizelement 8 oder anderen Arten von Funktionselementen oder Zusatzmodulen, dient. Die Erweiterung 23 ist seitlich und mindestens über die Höhe des Stellwegs des Kolbens 5 vorgesehen, so dass ein magnetinduktiver Lagesensor 7 in der Erweiterung 23 im Inneren des Hydraulikbereichs der Vorrichtung 10 aufgenommen werden kann. Parallel zu dem Stellweg des Kolbens 5 wird so die genaue, exakte Position der Betätigungsvorrichtung 10 durch einen innenliegenden Lagesensor 7 in Form des magnet-induktiven Sensors 7 ermittelt. Der Sensor 7 weist mindestens zwei Schaltelemente oder Reed-Kontakte auf, welche mit einem an dem Kolben 5 angebrachten Permanentmagneten 11 zusammenwirken. Es kann an dem Kolben 5 ein einziger Magnet 11 vorgesehen werden. Alternativ können auch mehrere, beispielsweise drei in einem Abstand zueinander an einem äußeren Bereich des Kolbens 5 angebrachte Magnete 11 vorgesehen werden. In letzterem Fall wird auch bei einer sich verstellten Drehlage des Kolbens 5 die genaue jeweilige Position der Betätigungsvorrichtung über die Erfassung mit dem nah angeordneten Sensor 7 in der seitlichen Erweiterung 23 ermöglicht. Die Magnete 11 können wie in Fig. 3b gezeigt an einem radialen äußeren Rand des Kolbens 5 in Richtung zu dem Zylinder 4 angebracht werden. Alternativ können die Magnete 11 oder der Magnet 11 an einer stirnseitigen unteren Fläche des Kolbens 5 angebracht werden. In letzterem Fall sind die Magnete 11 für eine präzise Lageerfassung des Kolbens ausreichend nah an dem direkt daneben vorgesehenen Sensor 7, stören jedoch nicht die Funktion des Kolbens 5 in dem Zylinder 4, nämlich insbesondere die Abdichtung über Kolbendichtringe etc. Bei Erreichen der Höhe eines Reed-Kontakts des Sensors 7 aktiviert das Magnetfeld des Magneten 11 die Schaltung, und ein Positionssignal zur Lagebestimmung der Betätigungsvorrichtung 10 bzw. des Kolbens 5 oder der Kolbenstange 6 wird an eine Steuerung beispielsweise im Inneren eines elektrischen Klemmkastens 9 weitergegeben.

Dadurch, dass die Magnete 11 oder der Magnet 11 an dem Kolben 5 an einem äußeren Randbereich entweder stirnseitig oder an der radialen Außenseite angebracht sind, sind diese sehr nah an dem Erfassungsbereich des Sensors 7, der beispielsweise ein magnet-induktiver Sensor oder Reed-Kontakt sein kann. Der Sensor kann so sehr genau die innenliegende Lage des Kolbens 5 im Verhältnis zum Zylinder 4 und dem Gehäuse 20 bestimmen, um beispielsweise die exakte Steuerung eines Bremslüftgeräts zu optimieren. Die Lage einer geöffneten Bremse bzw. geschlossenen Bremse kann so ebenso genau bestimmt werden, auch bei sich ändernden äußeren Umständen und damit einer leichten Verstellung der Endstellungen des Bremslüftgeräts. Auch lassen sich so leicht genaue Zwischenpositionen feststellen, oder die optimierte Überwachung des elektrohydraulischen Bremslüftgeräts für einen sogenannten Reservehub oder Resthub, welcher in manchen Anwendungsfällen derartiger Betätigungsgeräte 1 für z.B. den Verschleiß der Bremse essentiell ist, kann so deutlich verbessert werden. Als Sensor 7 können auch mehrere Sensoren 7 innerhalb der seitlichen Erweiterung 23 eingebaut sein. Die Sensoren 7 sind mit einer Steuerung verbunden und lassen sich entweder vorab werkseitig in ihrer Lage und Position einstellen oder auch so positionieren, dass sie anschließend in der Lage und Position veränderbar sind. Auf jeden Fall sind sie aufgrund der Aufnahme in der seitlichen Erweiterung 23 direkt im Inneren des Hydraulikteils des Gehäuses 20, 21 sicher aufgenommen. Eine Einstellbarkeit, Montage oder Positionierung der Sensoren 7 in der seitlichen Erweiterung 23 kann über entsprechende Öffnungen ermöglicht werden, beispielsweise durch einen Stopfen oder abnehmbare Teile des Gehäuses 20.

Auch bei diesem Ausführungsbeispiel der Fig. 3a, 3b ist das Gehäuse 20 im Wesentlichen aus zwei Gehäuseteilen 21, 22 aufgebaut, wobei dies für die Erfindung nicht beschränkend ist, und es können mehr als zwei oder nur ein Gehäuseteil 21 vorgesehen sein. In einem oberen Gehäuseteil 21 ist der hydraulische Teil der Betätigungsvorrichtung 10, nämlich die Pumpe 2 und die Kolben-/Zylinder-Einheit 4, 5, vorgesehen. Die Pumpe 2 wird durch einen Elektromotor 1 in einem darunterliegenden zweiten Teil 22 des Gehäuses 20 angetrieben, indem die Motorantriebswelle durch einen Trennboden 28 über Lager und Dichtungen durchgreift und die Pumpe 2 zum Erzeugen eines Hydraulikdrucks in dem Hydrauliköl der Hydraulikeinheit 3 antreibt. Die Verstellung des Kolbens 5 erfolgt auch hier entgegen einer (nicht dargestellten) mechanischen Spiralfeder, so dass eine Rückstellung nach Beendigung der Betätigung der Pumpe 2 automatisch in die Ausgangsstellung, wie sie in Fig. 3b gezeigt ist, erfolgt. Mit der Erfassung der exakten Position des Kolbens 5 im Inneren der Hydraulikeinheit 3 durch den ebenfalls im Hydrauliköl angeordneten magnet-induktiven Sensor 7 kann so eine sehr genaue Bestimmung der Betriebszustände im Inneren der Vorrichtung 10 bereitgestellt werden. Die Qualität der Lagesignale ist auch unabhängig von äußeren Einflüssen und Manipulationen. Es kann auch keine Beschädigung des Lagesensors 7 von außen her erfolgen, da dieser in einem geschlossenen Innenbereich, nämlich dem Raum der seitlichen Erweiterung 23, direkt in dem oberen Gehäuseteil 21 des Gehäuses 20 der Vorrichtung 10 aufgenommen ist.

Wie auch bei dem vorherigen Ausführungsbeispiel der Fig. 2 ist auch bei diesem Ausführungsbeispiel der Fig. 3a, 3b die seitliche Erweiterung 23 in einer rechteckigen Form vorgesehen und übergreift quasi den Klemmkasten 9 für die elektrischen Anschlüsse der Vorrichtung 10. Die Erweiterung 23 weist wie zuvor und wie in der Fig. 3a zu erkennen eine innere Aussparung 25 an einer Innenwand auf, welche den Aufnahmeraum für die elektrischen Funktionselemente 7, 8 oder andere Zusatzmodule oder Komponenten ohne eine übermäßige Erhöhung der Außenabmessungen der Vorrichtung 10 vergrößert. Die seitliche Erweiterung 23, die eine Art radialen Zusatzraum neben dem Bereich der Hydraulikeinheit 3 bietet, wird bei diesem Ausführungsbeispiel zur Aufnahme von zwei elektrischen Funktionselementen 7, 8 verwendet, nämlich einerseits einem magnet-induktiven Sensor 7 und andererseits einer Heizeinrichtung 8 in Form eines parallel zu dem Sensor 7 vorragenden Heizstabs. Beide sind in gekapselter Bauform vorgesehen, so dass sie geschützt im Inneren des Hydrauliköls für eine langfristige Funktion eingesetzt werden können.

Die Montage und Befestigung der elektrischen Funktionselemente 7, 8 erfolgt bei diesem Ausführungsbeispiel über Anschlussöffnungen 24, welche in einem Trennboden 28 eingebracht sind. Damit lassen sich beispielsweise über Verschraubungen mit Innengewinden und Außengewinden die Sensoren 7 und Heizeinrichtungen 8 leicht und ohne extra Befestigungsmittel an der Innenseite des Gehäuses 20 montieren. Die elektrischen Anschlüsse liegen dabei außerhalb von dem mit Hydrauliköl gefüllten oberen Bereich des ersten Gehäuseteils 21, nämlich entweder direkt in dem Klemmkasten 9 für elektrische Anschlüsse oder in einem Bereich des unteren Gehäuseteils 22 für den Elektromotor 1, der bei diesem Ausführungsbeispiel ein trockenlaufender Elektromotor 1 ist. Alternativ können die Anschlussöffnungen 24 auch derart vorgesehen sein, dass die Signalleitungen und Anschlusskomponenten nach außen hin von dem Gehäuse 20 gerichtet sind, so dass unabhängig von dem Klemmkasten 9 eine Anschlussmöglichkeit an externe Steuereinrichtungen etc. ermöglicht wird. Wie auch bei dem vorherigen Ausführungsbeispiel sind der erste Gehäuseteil 21 und der zweite Gehäuseteil 22 mit außenliegenden Kühlrippen an dem Außenumfang versehen. Die Montage und Befestigung der Gehäuseteile 21, 22 erfolgt über formentsprechende Flanschteile und Schrauben, wie in Fig. 3a in der auseinandergezogenen Perspektivansicht zu erkennen ist. An dem Trennboden 28 zwischen dem oberen Gehäuseteil 21 und dem unteren Gehäuseteil 22 können entsprechende Dichtungen vorhanden sein, um eine abgedichtete Bauform der Hydraulikeinheit 3 im Verhältnis zu dem unteren Gehäuseteil 22 für den Elektromotor 1 und etwaige weitere Elektroteile bereitzustellen.

Die seitliche Erweiterung 23 ist eine Art radiale, lokale Vergrößerung des Gehäuses 20 im Verhältnis zu der Längsachse X der elektrohydraulischen Betätigungsvorrichtung 10. Die seitliche Erweiterung 23 ist bei diesen Ausführungsbeispielen an einer Seite entsprechend der Seite vorgesehen, an welcher auch der elektrische Klemmkasten 9 vorhanden ist. An dem Teil der Erweiterung 23 des Gehäuses 20 sind bei diesem Ausführungsbeispiel ebenfalls an der Außenseite Kühlrippen des Gehäuses 20 vorhanden. Sowohl der obere erste Gehäuseteil 21 für die Hydraulikeinheit 3 als auch der untere Gehäuseteil 22 sind bei diesem Ausführungsbeispiel als eine Art Topfform mit allseitig geschlossenen Seiten gebildet, wobei die Montage über entsprechend geformte und zusammenpassende Montageflansche und Verschraubungen erfolgt. Die Gehäuseteile 21, 22 können auch anders ausgestaltet sein, und das Gehäuse 20 kann auch aus mehr als zwei Teilen aufgebaut sein. Bei dem dargestellten Ausführungsbeispiel ist, wie aus der Schnittdarstellung der Fig. 3b zu erkennen, der elektrische Klemmkasten 9 einstückig mit dem unteren Gehäuseteil 22 ausgebildet, beispielsweise durch ein Formgussteil. Der Klemmkasten 9 kann jedoch auch separat von dem unteren Gehäuseteil 22 hergestellt und dann angeschraubt werden. Die seitliche Erweiterung 23 der erfindungsgemäßen Aufnahme für elektrische Funktionselemente 7, 8 oder Zusatzkomponenten kann wie dargestellt mit einer rechteckigen Aussparung 25 an der Innenwand des Gehäuses 20 oder ohne diese Aussparung 25 gebildet werden. Die Form und Art von elektrischen Funktionselementen 7, 8 kann anders sein, ebenso wie die Anzahl der vorgesehenen Anschlussöffnungen 24 für derartige Funktionselemente. Bei Bedarf kann auch nur ein Funktionselement, beispielsweise eine elektrische Heizung 8 oder ein Lagesensor 7, vorhanden sein.

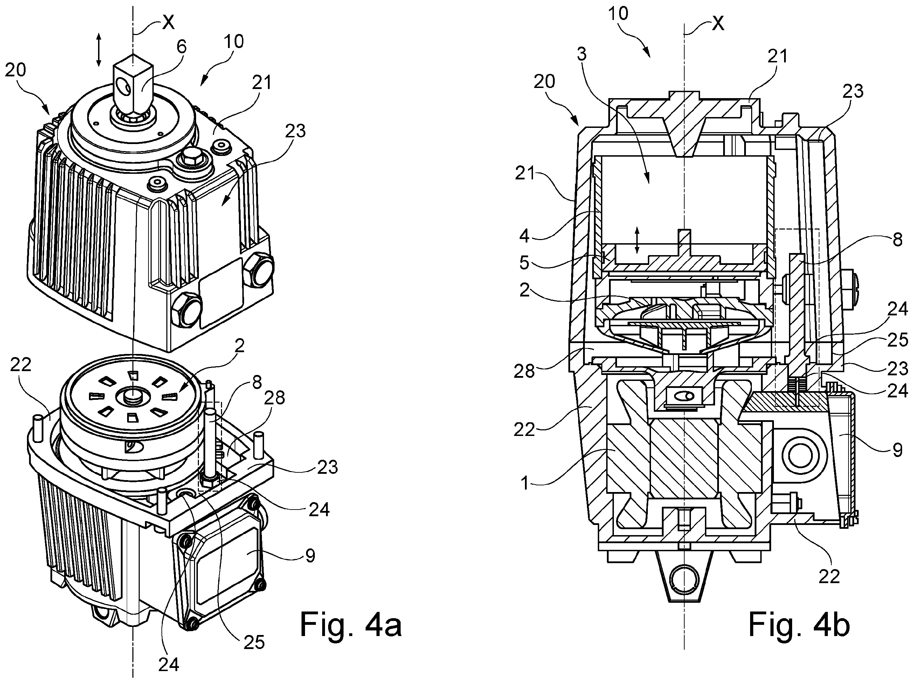

In der Fig. 4a und 4b ist in entsprechenden Ansichten, nämlich einer Perspektivansicht mit auseinandergebauten Gehäuseteilen 21, 22 (Fig. 4a) und einer vertikalen Schnittansicht (Fig. 4b), ein weiteres Ausführungsbeispiel der Erfindung gezeigt. Der Schnitt der Fig. 4b ist hier im Bereich einer Heizeinrichtung 8 vorgenommen, so dass die Kolbenstange hier nicht sichtbar ist. Im Wesentlichen entspricht dieses weitere Ausführungsbeispiel dem vorigen Ausführungsbeispiel der Fig. 3a, 3b, mit dem Unterschied, dass hier lediglich eine Heizeinrichtung 8 in Form eines in das Hydrauliköl hineinragenden Heizstabs vorhanden ist. Die Heizeinrichtung 8 ist auch hier in einer seitlichen Erweiterung 23 an dem Gehäuse 20, nämlich dem oberen Gehäuseteil 21, angebracht. Die Heizeinrichtung 8 erstreckt sich über in etwa die Hälfte der Höhe des oberen Gehäuseteils 21 und bewirkt so eine relativ schnelle Erwärmung des Hydrauliköls bei einer Inbetriebnahme der elektrohydraulischen Vorrichtung 10. Die Heizeinrichtung 8 ist an einer Aufnahmeöffnung 24 in Form eines mit Innengewinde versehenen Anschlusslochs an einem Trennboden 28 direkt eingeschraubt, und die elektrischen Anschlüsse für den Heizwiderstand der Heizeinrichtung 8 sind nach unten in den Bereich des elektrischen Klemmkastens 9 geführt (vgl. Fig. 4b). Ansonsten entspricht auch diese weitere Ausführungsform im Wesentlichen den vorherigen Ausführungsbeispielen der Erfindung. Ein Elektromotor 1 ist vorzugsweise als trockenlaufender Elektromotor in einem unteren Bereich eines Gehäuseteils 22 aufgenommen, und durch Antreiben der Pumpe 2 im Hydraulikbereich der Hydraulikeinheit 3 wird das Hydrauliköl unter Druck gesetzt, so dass der Kolben 5 entgegen der Kraft einer Spiralfeder nach oben hin verstellt wird (vgl. Bewegungspfeil Fig. 4b). Die seitliche, radiale Erweiterung 23 ist auch hier in einer Art rechteckigen Ausbuchtung des Gehäuses zumindest am oberen Gehäuseteil 21 und an den Flanschen der beiden Gehäuseteile 21, 22 formentsprechend realisiert. Damit wird ein seitlich von dem Kolben 5 vorhandener Aufnahmebereich für die auch optionalen Zusatzmodule, wie z. B. elektrische Funktionselemente 7, 8, bereitgestellt, die integriert in dem Hydrauliköl an dieser Stelle vorab mit eingebaut werden. Auch bei diesem Ausführungsbeispiel wird damit eine Beschädigung und Beeinträchtigung der Funktionselemente 7, 8 von außen her effektiv vermieden. Ein schnelles Aufheizen des Hydrauliköls wird durch die direkt in den Hydraulikteil hineinragende Heizeinrichtung 8 erreicht.

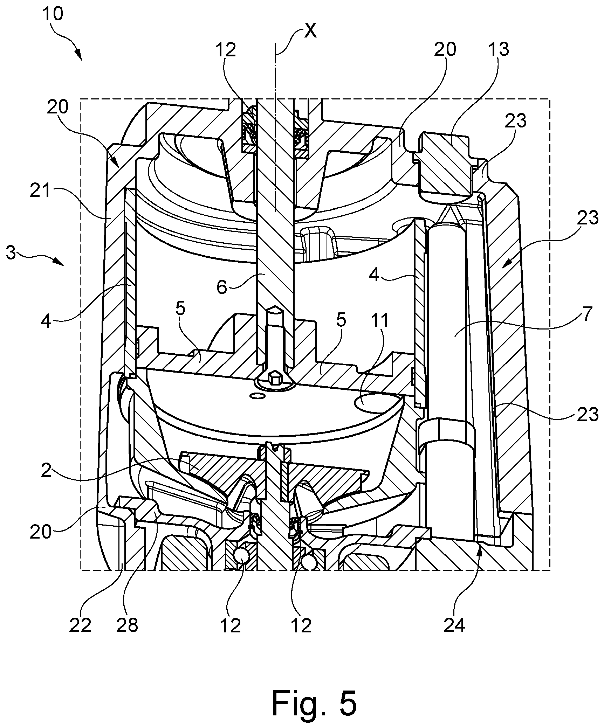

In der Fig. 5 ist in einer perspektivischen teilweisen Querschnittsansicht ein weiteres Ausführungsbeispiel einer erfindungsgemäßen elektrohydraulischen Betätigungsvorrichtung 10 gezeigt, wobei hier nur der obere Hydraulikteil der Vorrichtung 10 mit dem im Querschnitt geöffneten hydraulischen Gehäuseteil 21 und den darin liegenden Elementen gezeigt ist. Vom grundsätzlichen Aufbau und den Elementen der Vorrichtung 10 her unterscheidet sich dieses Ausführungsbeispiel im Wesentlichen nicht von den vorherigen Ausführungsbeispielen der Fig. 2 bis 4b, außer dass am Kolben 5 im Zylinder 4 der Kolben-/Zylinder-Einheit hier der Permanentmagnet 11 nicht seitlich an einer radialen Außenseite des Kolbens 5, sondern an einer nach unten weisenden Stirnfläche des Kolbens 5 angebracht ist. Alternativ kann der axial ausgerichtete Magnet 11 auch an der oberen Stirnfläche des Kolbens 5 angebracht sein. Ein im Wesentlichen kreisrunder Permanentmagnet ist in eine Vertiefung oder Ausnehmung bzw. Bohrung des Kolbens 5 eingesetzt. Der Magnet 11 befindet sich in einem seitlichen Randbereich der Stirnfläche des Kolbens 5, so dass er räumlich sehr nah an dem seitlich in der Erweiterung 23 vorgesehenen Sensor 7 positioniert ist. Auch hier kann ein magnetinduktiver Sensor 7 oder ein anderer Sensor vorhanden sein, welcher für die Lageerfassung des Kolbens 5 im Inneren des Zylinders 4 geeignet ist.

In dem in Fig. 5 gezeigten Ausführungsbeispiel ist ein sogenannter Reed-Kontakt als Sensor 7 angebracht, der sowohl sehr genau die jeweiligen Endstellungen des Kolbens 5, d. h. zum Beispiel eine obere Endstellung und eine untere Endstellung, erfassen kann. Im Falle der Anwendung der elektrohydraulischen Betätigungsvorrichtung 10 als ein Bremslüftgerät wären dies die Stellungen *"Bremse geöffnet"* und *"Bremse geschlossen".* Durch das Anordnen der Magnete 11 oder des einzigen Magneten 11 an der Stirnfläche des Kolbens 5 sind die Dichtefunktionen und die Ausgestaltung der Kolben 5 im Wesentlichen unverändert gegenüber herkömmlichen derartigen Kolben 5. Lediglich an der Stirnseite wird ein extra Magnet 11 vorgesehen in Form eines oder einer Mehrzahl von in jeweiligen Abständen zueinander im Außenbereich der Stirnfläche des Kolbens 5 angebrachten Magneten 11. Bei dem in Fig. 5 gezeigten Ausführungsbeispiel der erfindungsgemäßen Vorrichtung 10 ist des Weiteren noch in dem Bereich der seitlichen Erweiterung 23 am oberen Ende des Gehäuses 20, 21 bei diesem Beispiel ein Stopfen 13 vorhanden, über welchen ein Zugang zu dem Sensor 7 ermöglicht wird, beispielsweise für einen Austausch des Sensors oder eine Einstellung und Korrektur der Lage des Sensors 7. Dieser Stopfen 13 ist auch bei den vorherigen Ausführungsbeispielen der Erfindung teilweise vorhanden, dort jedoch nicht weiter beschrieben. Ferner ist sowohl an der Kolbenstange 6 als auch an dem Trennboden 28 zwischen dem Hydraulikteil und dem darunterliegenden trockenlaufenden Elektromotor jeweils ein oder mehrere Lager 12 oder eine Lagereinheit vorhanden. Dazu sind an diesen Bereichen auch Dichtungen vorhanden, welche eine Abdichtung des hydraulischen Teils 21 des Gehäuses 20 gewährleisten.

Die Heizeinrichtung 8 kann ein elektrisch betriebener Heizstab sein, der in gekapselter Bauform vorhanden ist, um in dem Hydrauliköl direkt die Erwärmung des Öls bewirken zu können. In anderer Hinsicht entspricht dieses Ausführungsbeispiel im Wesentlichen den vorherigen zwei Ausführungsbeispielen, und eine erneute Beschreibung der entsprechenden Komponenten und Teile, welche mit gleichen Bezugszeichen versehen sind, wird daher zur Vermeidung von Wiederholungen weggelassen.

Erfindungsgemäß kann lediglich ein Funktionselement 7, 8 in der seitlichen Erweiterung 23 des Gehäuses 20 vorgesehen sein mit entsprechend einer Aufnahmeöffnung 24. Alternativ können mehrere, auch mehr als zwei, Funktionselemente 7, 8 in dem seitlichen Raum der Erweiterung 23 eingebaut und montiert werden. Nicht genutzte Aufnahmeöffnungen 24 können mit Verschlussstopfen verschlossen sein. Anstatt eines trockenlaufenden Elektromotors 1 kann auch ein Nassläufer als Motor 1 verwendet werden. Die Einsatzmöglichkeiten, die Flexibilität und die Variabilität der elektrohydraulischen Betätigungsvorrichtung 10 sind mit der Erfindung dadurch deutlich erhöht.

## Patentansprüche

1. Elektrohydraulische Betätigungsvorrichtung (10) mit einem Elektromotor (1) und einer von diesem angetriebenen Pumpe (2) zum Betrieb einer Hydraulikeinheit (3) mit einem Stellzylinder (4), einem Kolben (5) und einer als Betätigungselement dienenden und aus einem Gehäuse (20) vorragenden Kolbenstange (6), wobei der Elektromotor (1) und die Hydraulikeinheit (3) jeweils in einem Gehäuseteil (21, 22) des Gehäuses (20) aufgenommen sind, wobei der Gehäuseteil (21) der Hydraulikeinheit (3) vom Gehäuseteil (22) zur Aufnahme des Elektromotors (1) abgetrennt und dazu abgedichtet ist, **dadurch gekennzeichnet, dass** das Gehäuse (20) mindestens im Bereich der Hydraulikeinheit (3) eine im Verhältnis zur Längsachse X der Vorrichtung (10) seitliche Erweiterung (23) als lokale Ausbuchtung des Gehäuses an mindestens einer Seite über den Umfang des Stellzylinders (4) hinaus und mindestens über eine Höhe eines Stellweges des Kolbens (5) hinweg aufweist für eine integrierte Aufnahme von insbesondere elektrischen Funktionselementen (7, 8), Sensoren oder Steuerkomponenten direkt im hydraulischen, mit Hydrauliköl gefüllten Teil des Gehäuses (20) seitlich angrenzend zu der Hydraulikeinheit (3) und dass in der Erweiterung (23) Anschlüsse oder Aufnahmen für die Funktionselemente (7, 8) vorgesehen sind.

2. Vorrichtung (10) nach Anspruch 1, **dadurch gekennzeichnet, dass** die Erweiterung (23) des Gehäuses (20) einen im Querschnitt etwa rechteckigen seitlichen Aufnahmebereich für Funktionselemente (7, 8) bildet.

3. Vorrichtung (10) nach Anspruch 1 oder 2, **dadurch gekennzeichnet, dass** die Erweiterung (23) mit Anschlussöffnungen (24) zu einer Außenseite des Gehäuses (20) oder direkt zu einem Klemmkasten (9) für elektrische Anschlüsse versehen ist.

4. Vorrichtung (10) nach einem der vorangegangenen Ansprüche, **dadurch gekennzeichnet, dass** die Funktionselemente (7, 8) mindestens einen berührungslosen, magnet-induktiven Sensor (7) umfassen, welcher zur Lageerfassung des Kolbens (5) mittels mindestens eines daran angebrachten Magneten (11) angeordnet und eingerichtet ist.

5. Vorrichtung (10) nach einem der vorangegangenen Ansprüche, **dadurch gekennzeichnet, dass** die Funktionselemente (7, 8) mindestens eine elektrische Heizeinrichtung (8) umfassen, welche in das Hydrauliköl der Hydraulikeinheit (3) hineinragt.

6. Vorrichtung (10) nach einem der vorangegangenen Ansprüche, **dadurch gekennzeichnet, dass** die Erweiterung (23) oberhalb und in Fortsetzung zu einem Klemmkasten (9) für elektrische Anschlüsse der Vorrichtung (10) vorgesehen ist.

7. Vorrichtung (10) nach einem der vorangegangenen Ansprüche, **dadurch gekennzeichnet, dass** das Gehäuse (20) an der Innenseite einer Wand der Erweiterung (23) mit einer Aussparung (25) zum Bilden eines Aufnahmebereichs für die elektrischen Funktionselemente (7, 8) versehen ist.

8. Vorrichtung (10) nach einem der vorangegangenen Ansprüche, **dadurch gekennzeichnet, dass** die elektrischen Funktionselemente (7, 8) in dem hydraulischen Teil (21) des Gehäuses (20) eine gekapselte Bauform aufweisen.

9. Vorrichtung (10) nach einem der vorangegangenen Ansprüche, **dadurch gekennzeichnet, dass** die Anschlüsse oder Aufnahmen der Funktionselemente (7, 8) in einem Trennboden (28) zwischen dem Gehäuseteil (21) der Hydraulikeinheit (3) und dem Gehäuseteil (22) des Elektromotors (1) vorgesehen sind.

## Claims

1. Electrohydraulic actuation device (10) with an electric motor (1) and a pump (2) driven by the electric motor (1) for the operation of a hydraulic unit (3) with a positioning cylinder (4), a piston (5) and a piston rod (6) serving as actuation element and projecting from a housing (20), wherein the electric motor (1) and the hydraulic unit (3) are each housed in a housing part (21, 22) of the housing (20), wherein the housing part (21) of the hydraulic unit (3) is separated from and sealed off from the housing part (22) for housing the electric motor (1),
**characterized in that**
the housing (20) has at least in the area of the hydraulic unit (3) a lateral enlargement (23) as local protrusion of the housing in relation to the longitudinal axis X of the device (10), at at least a side beyond the circumference of the positioning cylinder (4) and at least along a height of a stroke of the piston (5), for an integrated housing of in particular electrical functional elements (7, 8), sensors or control component parts directly in the hydraulic part of the housing (20) filled with hydraulic oil and laterally adjacent to the hydraulic unit (3), and that connections or receiving means for the functional elements (7, 8) are provided in the enlargement (23).

2. Device (10) according to claim 1, **characterized in that** the enlargement (23) of the housing (20) forms a lateral receiving area approximately rectangular in cross section for functional elements (7, 8).

3. Device (10) according to claim 1 or 2, **characterized in that** that the enlargement (23) is provided with connection openings (24) to an outside of the housing (20) or directly to a terminal box (9) for electrical connections.

4. Device (10) according to one of the preceding claims, **characterized in that** the functional elements (7, 8) comprise at least a contact-free, magnetic-induction sensor (7), which is arranged and configured for position detection of the piston (5) by means of at least a magnet (11) mounted thereon.

5. Device (10) according to one of the preceding claims, **characterized in that** the functional elements (7, 8) comprise at least an electric heating means (8) which projects into the hydraulic oil of the hydraulic unit (3).

6. Device (10) according to one of the preceding claims, **characterized in that** the enlargement (23) is provided above and in continuation to a terminal box (9) for electrical connections of the device (10).

7. Device (10) according to one of the preceding claims, **characterized in that** the housing (20) at the inside of a wall of the enlargement (23) is provided with a recess (25) for forming a receiving area for the electrical functional elements (7, 8).

8. Device (10) according to one of the preceding claims, **characterized in that** the electrical functional elements (7, 8) in the hydraulic part (21) of the housing (20) have an encapsulated constructional shape.

9. Device (10) according to one of the preceding claims, **characterized in that** the connection or receiving means of the functional elements (7, 8) are provided in a partitioning bottom (28) between the housing part (21) of the hydraulic unit (3) and the housing part (22) of the electric motor (1).

## Revendications

1. Dispositif d'actionnement électrohydraulique (10) comportant un moteur électrique (1) et une pompe (2) entraînée par celui-ci pour faire fonctionner une unité hydraulique (3) comportant un vérin de réglage (4), un piston (5) et une tige de piston (6) servant d'élément d'actionnement et dépassant d'un boîtier (20), dans lequel le moteur électrique (1) et l'unité hydraulique (3) sont logés respectivement dans une partie de boîtier (21, 22) du boîtier (20), dans lequel la partie de boîtier (21) de l'unité hydraulique (3) est séparée de la partie de boîtier (22) destinée à loger le moteur électrique (1) et est rendue étanche par rapport à celle-ci,
**caractérisé en ce que** le boîtier (20) présente, au moins dans la zone de l'unité hydraulique (3), une extension (23) latérale par rapport à l'axe longitudinal X du dispositif (10), en tant que renflement local du boîtier sur au moins un côté au-delà de la périphérie du vérin de réglage (4) et au moins par dessus une hauteur d'une course de réglage du piston (5), pour un logement intégré, en particulier d'éléments fonctionnels (7, 8) électriques, de capteurs ou de composants de commande directement dans la partie hydraulique, remplie d'huile hydraulique, du boîtier (20), latéralement adjacente à l'unité hydraulique (3), **et en ce que** des raccordements ou des logements pour les éléments fonctionnels (7, 8) sont prévus dans l'extension (23).

2. Dispositif (10) selon la revendication 1, **caractérisé en ce que** l'extension (23) du boîtier (20) forme une zone de logement latérale de section transversale approximativement rectangulaire pour des éléments fonctionnels (7, 8).

3. Dispositif (10) selon la revendication 1 ou 2, **caractérisé en ce que** l'extension (23) est pourvue d'ouvertures de raccordement (24) vers un côté extérieur du boîtier (20) ou directement vers une boîte à bornes (9) pour des raccordements électriques.

4. Dispositif (10) selon l'une des revendications précédentes,
**caractérisé en ce que** les éléments fonctionnels (7, 8) comprennent au moins un capteur magnéto-inductif (7) sans contact, lequel est agencé et conçu pour détecter la position du piston (5) à l'aide d'au moins un aimant (11) monté sur celui-ci.

5. Dispositif (10) selon l'une des revendications précédentes,
**caractérisé en ce que** les éléments fonctionnels (7, 8) comprennent au moins un appareil chauffant électrique (8) lequel pénètre dans l'huile hydraulique de l'unité hydraulique (3).

6. Dispositif (10) selon l'une des revendications précédentes,
**caractérisé en ce que** l'extension (23) est prévue au-dessus et dans le prolongement d'une boîte à bornes (9) pour des raccordements électriques du dispositif (10).

7. Dispositif (10) selon l'une des revendications précédentes,
**caractérisé en ce que** le boîtier (20) est pourvu, sur le côté intérieur d'une paroi de l'extension (23), d'un évidement (25) destiné à former une zone de logement pour les éléments fonctionnels (7, 8) électriques.

8. Dispositif (10) selon l'une des revendications précédentes,
**caractérisé en ce que** les éléments fonctionnels (7, 8) électriques dans la partie hydraulique (21) du boîtier (20) présentent une construction encapsulée.

9. Dispositif (10) selon l'une des revendications précédentes,
**caractérisé en ce que** les raccordements ou les logements des éléments fonctionnels (7, 8) sont prévus dans un fond de séparation (28) entre la partie de boîtier (21) de l'unité hydraulique (3) et la partie de boîtier (22) du moteur électrique (1).
